# EUROPEAN PATENT APPLICATION

(11) **EP 4 831 808 A1**
(43) Date of publication of application: **28.10.2026**
(21) Application number: 25172759.0
(22) Date of filing: 25.04.2025
(51) Int. Cl.: G06F 9/50, G06N 5/043

(54) **SYSTEM AND METHOD FOR MULTI-AGENT AI ORCHESTRATION WITH INTEGRATED INTER-AGENT VALIDATION**

(71) Applicant: Strive Technologies d.o.o., 10000 Zagreb (HR)
(72) Inventor: Zvonimir, Orec, 10000 Zagreb (HR); Marijan, Mumdziev, 10000 Zagreb (HR)

(57) **Abstract**

A computer-implemented method and system for multi-agent artificial intelligence (AI) analysis address the technical problem of unreliability and inconsistency in outputs generated by collaborating AI agents. The system comprises an orchestration engine (110) configured to execute a computational graph defined by a declarative configuration. The graph includes a plurality of specialized AI agent nodes (125) which communicate indirectly via a shared state mechanism (115) managed by the orchestration engine (110). Integral to the system are automated inter-agent validation protocols performed during workflow execution. These protocols, activated by the orchestration engine (110), automatically verify consistency and plausibility of structured data generated by different agent nodes (125), for example through structured data cross-referencing, consistency checking, confidence-triggered tool-based verification loops, or redundant analysis with reconciliation. This provides a technical solution for generating more reliable and validated complex analytical outputs, suitable for applications such as automated business strategy generation.

## Description

### b) Technical Field

The present invention relates generally to the field of artificial intelligence (AI) systems. More specifically, it relates to computer-implemented methods and systems for orchestrating multiple specialized AI agents, including mechanisms for automated inter-agent validation, particularly for application in generating complex analytical outputs, such as in the field of business strategy analysis.

### c) Background Art

The development of sophisticated AI systems involves advancements in multi-agent architectures, workflow orchestration, inter-agent validation, data integration, and application-specific intelligence. The prior art reflects various approaches:

**Multi-Agent System (MAS) Architectures and AI Orchestration:** The prior art discloses complex AI architectures involving multiple, specialized agents coordinated by an orchestrator (e.g., US 12,111,859 B2) or operating within specific frameworks. Architectures for MAS often focus on modularity and communication protocols, sometimes employing service-oriented principles where agents expose functions as services and interact via querying/providing these services (e.g., US 2012/0029656 A1 / EP 2598999 A2), or using open communication frameworks for dynamic protocol negotiation (e.g., US 2006/0225064 A1 / EP 1708130 A2). Systems combining triage agents and retrieval agents are also known (e.g., US 2025/086647 A1). While these architectures provide foundational structures for agent interaction and service discovery/invocation or basic coordination, they often lack specific, deeply integrated technical mechanisms for ensuring the semantic consistency and factual accuracy through automated, protocol-driven validation between heterogeneous analytical agents performing distinct steps within a complex workflow.

**Advanced AI Orchestration:** Advanced AI orchestration platforms coordinate multiple agents/bots/services across various channels (e.g., US 12,111,859 B2; US 2022/0116485 A1 / EP 4009421 A1). Graph-based execution frameworks (e.g., LangGraph) manage complex, stateful workflows. Techniques for optimizing graph execution performance exist (e.g., US 10,965,536 B2 / EP 3480767 A1). However, the core function of these platforms is typically task scheduling, conversation routing, data retrieval (e.g., via RAG), and communication format normalization, rather than embedding configurable protocols for automated inter-agent validation of analytical content (e.g., consistency checking, confidence-triggered verification, automated reconciliation) as an integral part of the workflow logic itself.

**Declarative Configuration and State Management:** Declarative frameworks for defining general process workflows (e.g., using XOML as in US 8,170,901 B2 / EP 1914687 A2) and state management techniques exist. While enabling workflow definition and basic data integrity, these frameworks generally lack the specific declarative primitives required to configure complex inter-agent validation logic directly within the workflow definition itself. Furthermore, standard state management often lacks dedicated structures for tracking and utilizing granular validation metadata generated dynamically during the collaborative workflow.

**Workflow Initiation and Control:** AI Triage agents exist for filtering or routing requests (e.g., US 2025/086647 A1). User interaction for providing parameters or confirmations within workflows is also conventional. However, the prior art does not appear to disclose the specific technical mechanism for workflow initiation required for complex analytical graphs where a Triage Agent performs analysis, facilitates explicit user validation of key analytical parameters, and utilizes a specific control signal to simultaneously inject these validated parameters into a shared state and direct control flow to appropriate downstream analytical agents.

**Inter-Agent Validation and Reliability Techniques:** Individual validation concepts exist (schema checks, API validation, RAG for grounding, arbiter agents for specific tasks, confidence scoring, feedback loops). The key technical challenge, unaddressed by the prior art, lies in integrating a suite of these techniques into specific, automated protocols operating between collaborating analytical agents within an orchestrated workflow. There remains a need for systems that automatically perform structured data cross-referencing, trigger verification agents based on confidence thresholds, execute and reconcile redundant parallel analyses, and systematically log runtime validation failures for targeted system improvement, all as coordinated parts of the main analytical process.

**Data Integration for AI Systems:** Middleware, connectors, Al-query methods, schema mapping tools, and secure credential management solutions for data integration exist. However, providing a cohesive solution integrated within a multi-agent orchestration framework that features a standardized query interface for agents, potentially automated Al-specific schema mapping, and agent-aware security protocols, remains a significant technical challenge.

**AI in Business Intelligence and Strategic Planning:** AI is applied to specific BI and strategic tasks. The technical challenge lies in integrating these diverse analytical capabilities within a single, end-to-end multi-agent system capable of orchestrating the entire process while ensuring the reliability of the complex, synthesized output through robust, integrated inter-agent validation.

**Summary of Technical Problems:** Based on the analysis of the prior art, several technical problems persist in the field of complex, automated AI analysis systems:
1. Lack of integrated and automated inter-agent validation protocols embedded directly within multi-agent AI orchestration frameworks, limiting the reliability of outputs generated by collaborating agents.
2. Absence of a specific workflow initiation mechanism combining Triage Agent analysis, explicit user validation, and simultaneous state injection/control flow routing via a dedicated control signal for complex analytical graphs.
3. Limitations in existing declarative configuration frameworks which do not typically allow for the direct specification of complex inter-agent validation logic.
4. The challenge of providing secure, standardized, and efficient access to diverse enterprise data sources specifically tailored for multiple interacting AI agents.
5. The difficulty in reliably automating the generation of complex, end-to-end analytical outputs, such as comprehensive business strategies, by orchestrating and validating the work of multiple specialized AI agents.

There is therefore a need for improved methods and systems that address these limitations in the prior art.

### d) Disclosure of the Invention

The present invention aims to overcome or at least mitigate the aforementioned limitations of the prior art by providing a computer-implemented method and system (100) for the validated execution of multi-agent AI workflows, which offer enhanced reliability, consistency, and configurability for complex analytical tasks, such as automated business strategy generation.

According to a first aspect, the invention provides a computer-implemented method comprising: receiving initial input data; processing the initial input data by a Triage Agent node module (105) communicatively coupled to an orchestration engine (110) to generate processed data and determine an initial workflow routing instruction; generating, by the Triage Agent node module (105), a control signal comprising the initial workflow routing instruction specifying a next node in a computational graph defined by a declarative configuration and a data payload comprising at least a portion of the processed data; updating, by the orchestration engine (110), a shared state mechanism (115) based on the data payload of the control signal; executing, by the orchestration engine (110), the computational graph comprising a plurality of specialized AI agent nodes (125), wherein execution proceeds based on predefined dependencies between the AI agent nodes stored in the declarative configuration and further based on the initial workflow routing instruction from the control signal; exchanging, during execution of the computational graph, structured data between the plurality of specialized AI agent nodes (125) indirectly via the shared state mechanism (115); and, crucially, performing, by the orchestration engine (110) activating one or more designated validation nodes or logic within the computational graph, at least one automated inter-agent validation protocol on structured data stored within the shared state mechanism (115), the data having been generated by one or more of the specialized AI agent nodes (125).

According to a second aspect, the invention provides a system comprising: one or more processors; memory; an input interface (102) configured to receive initial input data for a task; a Triage Agent node module (105) stored in the memory and executable by the one or more processors to process the initial input data to generate processed data and determine an initial workflow routing instruction and generate a control signal comprising the initial workflow routing instruction specifying a next node in a computational graph and a data payload comprising at least a portion of the processed data; declarative configuration storage storing a declarative configuration defining the computational graph, including predefined dependencies between a plurality of specialized AI agent nodes (125) forming the computational graph; a shared state mechanism (115) stored in the memory for enabling indirect exchange of structured data between the plurality of specialized AI agent nodes; and an orchestration engine (110) stored in the memory and executable by the one or more processors to update the shared state mechanism (115) based on the data payload of the control signal generated by the Triage Agent node module (105), execute the computational graph based on the predefined dependencies stored in the declarative configuration storage and the initial workflow routing instruction from the control signal, and activate one or more designated validation nodes or logic within the computational graph to perform at least one automated inter-agent validation protocol on structured data stored within the shared state mechanism (115).

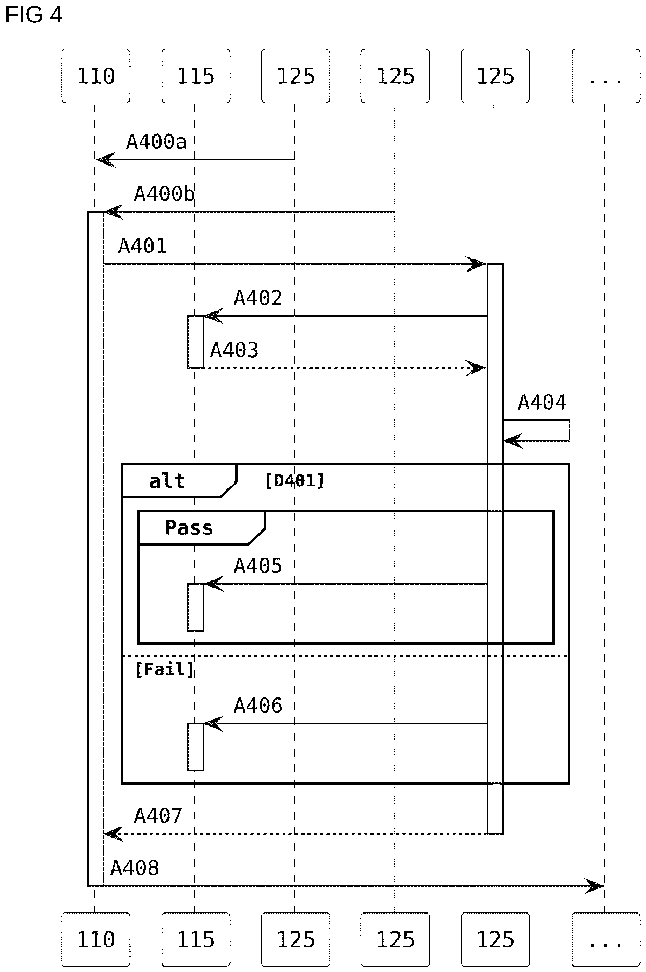

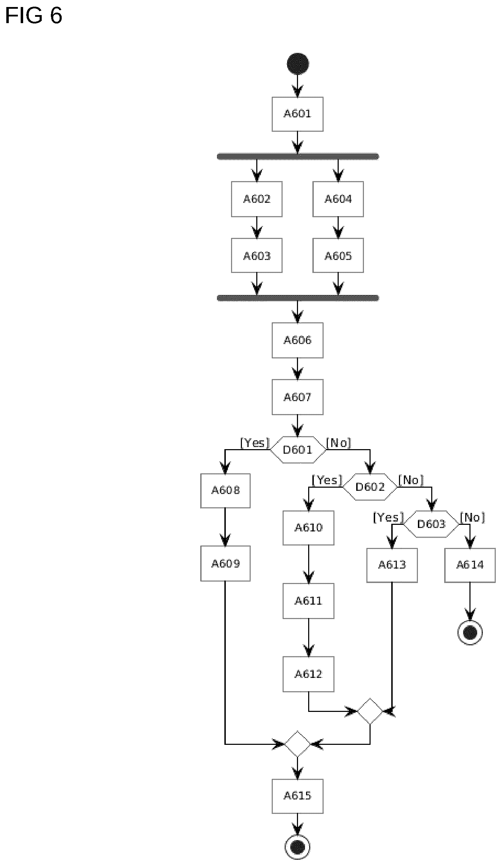

The integrated inter-agent validation protocols represent a core technical contribution. These protocols are automatically executed during the workflow and may include, for example, structured data cross-referencing between outputs of different agents (FIG 4), consistency checking based on predefined rules, agent-triggered tool-based verification based on confidence scores generated by agents, and/or redundant analysis with automated reconciliation of conflicting results (FIG 6). By embedding these specific validation mechanisms within the orchestration flow, the method and system provide the technical effect of significantly improving the reliability, factual accuracy, and internal consistency of the final analytical output compared to prior art systems. This directly addresses the problem of hallucinations and inconsistencies often encountered in complex multi-agent or generative AI systems.

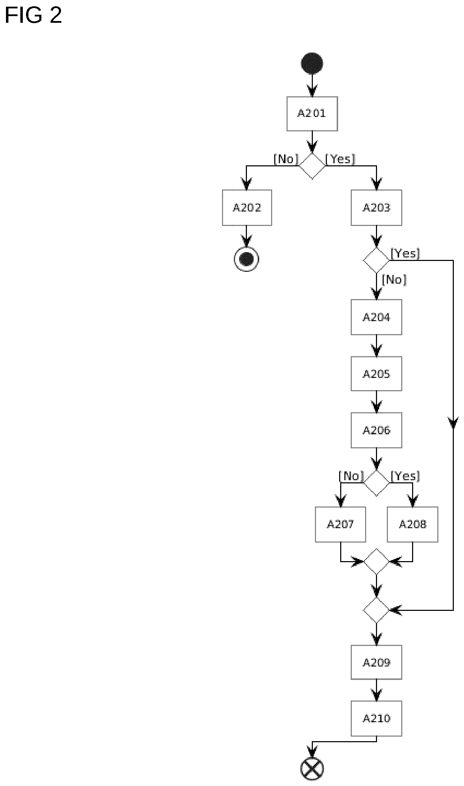

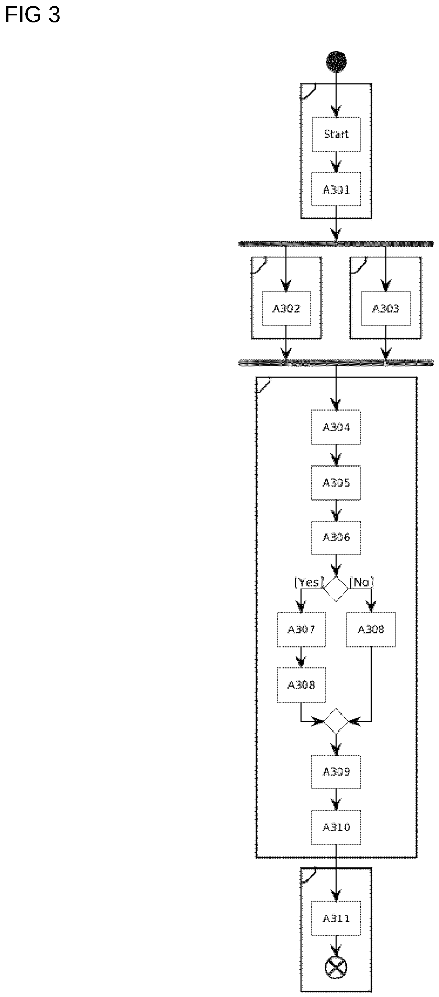

Furthermore, the specific workflow initiation mechanism involving the Triage Agent (105), potentially including user confirmation of key parameters (such as identified competitors, FIG 2) and the generation of a control signal (e.g., a Command object) that simultaneously directs control flow and injects validated initial parameters into the shared state (115), provides the technical effect of ensuring workflow relevance and enabling efficient, context-aware initiation of the complex downstream analytical graph (FIG 3).

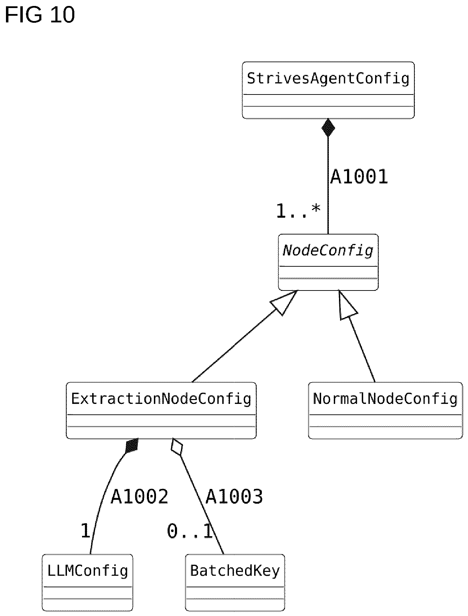

The use of a declarative configuration framework (FIG 10) which defines the graph structure, agent dependencies, and potentially aspects of the validation logic itself, provides the technical effect of enhancing system flexibility and maintainability. The shared state mechanism (115) facilitates robust indirect communication between agents within the orchestrated workflow.

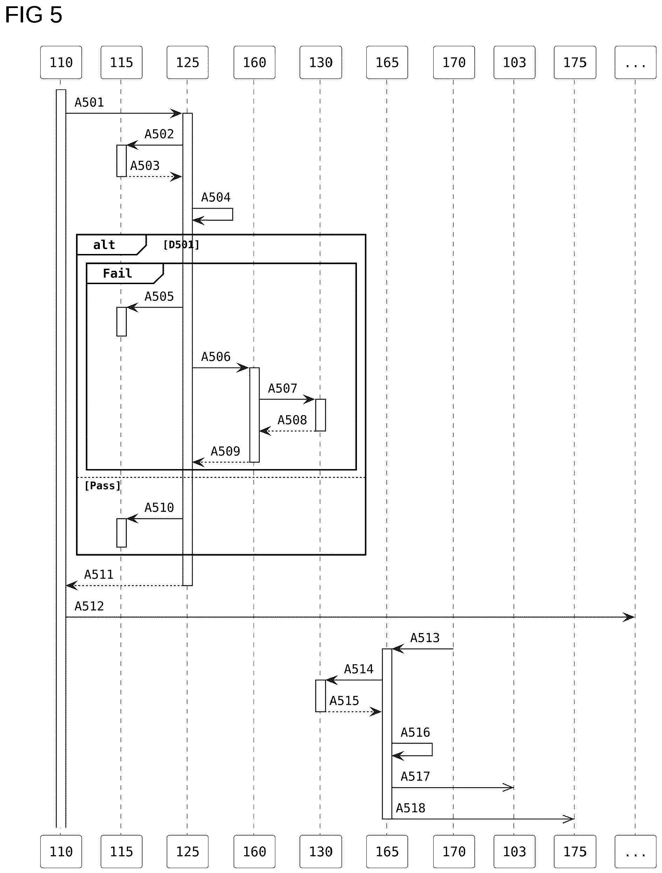

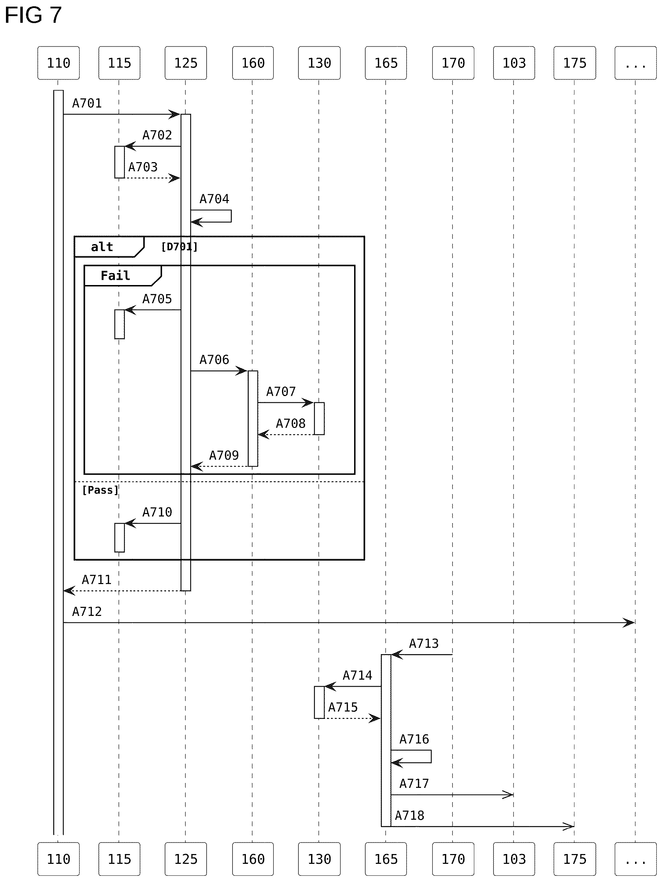

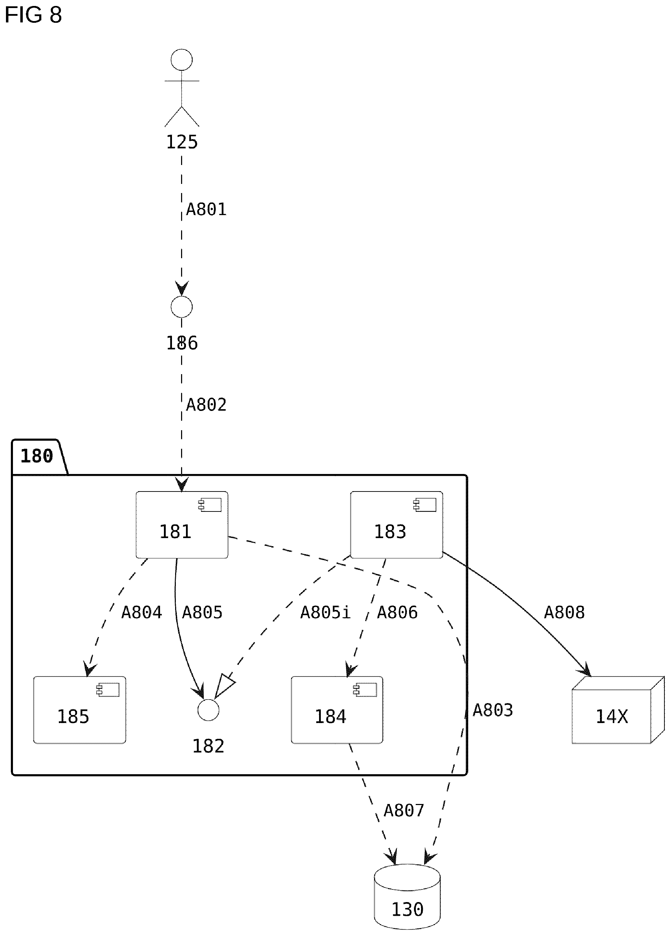

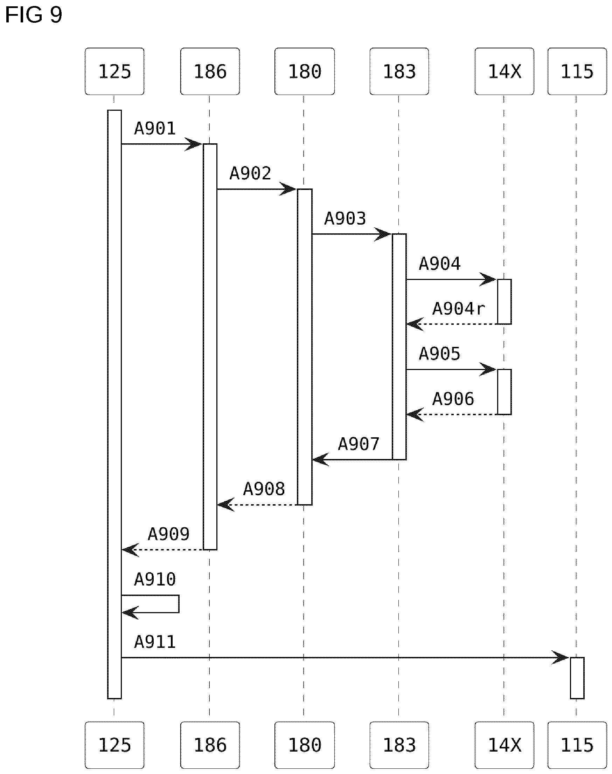

The core inventive concepts of the present invention, providing technical solutions to the identified problems, include:
1. A specific workflow initiation mechanism orchestrated via a Triage Agent (105) which processes initial input, optionally validates key parameters with a user (101), and generates a dedicated control signal comprising both initial workflow routing instructions and a validated data payload for simultaneous injection into the shared state mechanism (115), thereby enabling efficient and context-aware activation of complex downstream analytical workflows managed by the orchestration engine (110) (as supported by \[0006], \[0016], \[0042]-[0045]) .
2. The direct integration and automated execution of specific inter-agent validation protocols within the multi-agent orchestration flow, activated by the orchestration engine (110) based on a declarative configuration (FIG 10) and operating upon data within the shared state mechanism (115). These protocols, such as structured data cross-referencing (FIG 4), agent-triggered tool-based verification, and redundant analysis with reconciliation (FIG 6), represent a core technical contribution that addresses limitations in prior art by embedding validation as an integral part of the workflow logic itself, providing the technical effect of significantly enhanced output reliability, accuracy, and internal consistency (as supported by \[0003], \[0004], \[0007], \[0015], \[0046]-[0049]).
3. An integrated feedback loop logging mechanism (FIG 5, FIG 7) wherein detailed validation event data resulting from the inter-agent validation protocols is logged (A706-A709) to a persistent data store (130) distinct from the runtime shared state (115). This persisted data is configured for subsequent offline analysis by an AI model validation module (165) (A716) to identify systemic patterns or issues, which can then trigger or inform targeted system improvements like agent prompt refinement or AI model fine-tuning (A717, A718), establishing a long-term improvement cycle (as supported by \[0007], \[0050]).
4. Optionally, a cohesive Data Integration Layer (180) (FIG 8, FIG 9) architecturally integrated with the multi-agent orchestration framework, featuring a standardized agent tool interface (186), specific connectors (183) managed by a connector manager (181), a data transformation engine (184), and a secure credential vault (185), thereby providing a structured, secure, and potentially Al-enhanced mechanism for specialized AI agents (125) to interact with diverse external enterprise data sources (14X) as part of the orchestrated workflow (as supported by \[0008], \[0051]-[0054]).

The advantages over the prior art include significantly reduced manual effort, improved data consistency through automated cross-validation and reconciliation, deeper analytical insights achieved by coordinating specialized AI agents, enhanced adaptability through configurable workflows and dynamic orchestration, and improved system performance over time via the integrated feedback and re-training mechanisms (FIG 5, FIG 7). The system provides a more efficient, reliable, and comprehensive solution for generating actionable competitive intelligence.

### e) Brief Description of the Drawings

Embodiments of the invention are further described hereinafter with reference to the accompanying drawings, in which:
FIG. 1 shows a schematic block diagram illustrating an exemplary overall architecture of the multi-agent AI analysis system.
FIG. 2 illustrates an exemplary process performed by the Triage Agent node module for workflow initiation.
FIG. 3 illustrates an example orchestration flow within the computational graph.
FIG. 4 illustrates an exemplary process for the automated inter-agent validation protocol involving structured data cross-referencing.
FIG. 5 illustrates an exemplary process for the automated inter-agent validation protocol involving feedback loop logging (runtime detail).
FIG. 6 illustrates an exemplary process for the automated inter-agent validation protocol involving redundant analysis and reconciliation.
FIG. 7 illustrates the automated inter-agent validation protocol involving feedback loop logging including periodic analysis.
FIG. 8 illustrates the conceptual architecture of the Data Integration Layer.
FIG. 9 illustrates the conceptual sequence of steps for retrieving data via the Data Integration Layer.
FIG. 10 illustrates the conceptual structure of the Declarative Configuration framework.

### f) Detailed Description of the Embodiments

The present invention provides methods and systems for improving the reliability and relevance of outputs generated by multi-agent artificial intelligence (AI) systems, particularly when applied to complex analytical tasks such as business strategy generation. This is achieved through a combination of a specific orchestration architecture, a controlled workflow initiation mechanism, and integrated inter-agent validation protocols.

### Overall System Architecture

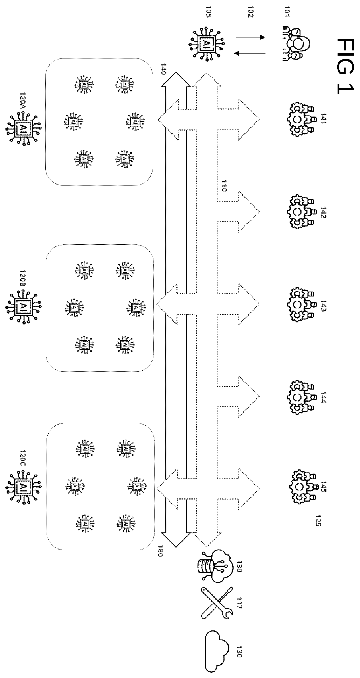

Referring now to FIG. 1, an exemplary overall architecture of the multi-agent AI analysis system (100) was shown. The system comprised several interconnected layers and components. A User (101) interacted with the system via a User Interface (102), such as a Plan Interface, providing initial input for an analytical task.

Workflow initiation was handled by a Triage AI Agent (105), which processed the initial input from the User Interface (102) and interacted with an AI Middleware / Orchestration Engine (110) to start the main workflow and populate initial data into a Shared State Mechanism (115).

The AI Middleware / Orchestration Engine (110) served as the central coordinator. In embodiments, it was implemented using a graph-based execution framework, for example, leveraging libraries such as LangGraph, capable of executing a computational graph defined by a declarative configuration (described later, see FIG 10). The Orchestration Engine (110) managed the overall workflow, including activating Specialized AI Agent Nodes (125), managing the Shared State Mechanism (115), facilitating communication, and invoking Tools (117).

The Shared State Mechanism (115), managed by the Orchestration Engine (110), acted as a central data repository or blackboard for the workflow. It stored input parameters, intermediate results generated by agents, final outputs, configuration parameters, and validation metadata. Communication between agents (125) occurred indirectly via reading from and writing structured data to this Shared State Mechanism (115). Data updates could be cumulative. Structured data exchange was preferably facilitated using predefined schemas, such as Pydantic models. The Shared State Mechanism (115) could be implemented using a data structure like the 'StrivesAgentState' TypedDict mentioned previously. This structure typically included fields such as 'messages' (a list of 'BaseMessage' objects (116) for conversation history), 'customer_agent_messages' (another list of messages), 'user_comments' (a dictionary for user feedback), and crucially, the 'information_base' (a dictionary mapping string keys to values of 'Any' type). This 'information_base' acted as the primary blackboard, storing input parameters, intermediate results, agent outputs, configuration, and validation metadata. Values could be primitive types or structured objects conforming to predefined Pydantic model schemas (118) specified in the configuration.

The computational graph executed by the Orchestration Engine (110) comprised a plurality of Specialized AI Agent Nodes (125). These nodes represented individual processing steps or agents configured to perform specific analytical tasks. As shown conceptually in FIG. 1, these could be logically grouped based on function, for example, into a Research Meta-Al Agent Group (120a) for data gathering, an Analysis Meta-Al Agent Group (120b) for processing and validation, and a Decision Meta-Al Agent Group (120c) for synthesis and recommendation generation. Each node (125) interacted with the Shared State Mechanism (115) to retrieve its necessary inputs and store its outputs.

Agents (125) could invoke various Tools (117) facilitated by the Orchestration Engine (110). These tools provided access to external resources or functionalities, such as accessing internal knowledge repositories like a Knowledge Hub Database (KHDB) (130) (e.g., via RAG tools), accessing public information via the World Wide Web (WWW) (150) (e.g., via Web Search tools), or interacting with enterprise systems (14X) via the Data Integration Layer (180).

### Declarative Configuration Framework

Referring now to FIG. 10, the structure and behavior of the computational graph, including the Specialized AI Agent Nodes (125) and their dependencies, were defined using a declarative configuration framework. This involved a main configuration structure StrivesAgentConfig (190) which contained definitions for individual nodes (NodeConfig (191) instances). Relationship A1001 indicated it contained one or more NodeConfig (191) objects.

Each NodeConfig (191) represented the abstract base class for node configurations, specifying parameters defining a node, such as its unique name, its type (e.g., Extraction Node (192), Normal Node (193)), its dependencies (depends_on list specifying prerequisite node names), configuration for its AI model (LLMConfig (194) if applicable), available Tools (117), and expected input/output data schemas. Extraction nodes (192) were concrete subclasses for LLM nodes, dynamically configured using a factory function based on an ExtractionNodeConfig (192). Relationship A1002 indicated it used one LLMConfig (194). Relationship A1003 indicated optional use of BatchedKey (195). This standardized prompt formatting, LLM invocation, tool usage, output parsing, and state updates. Normal nodes (193) represented another concrete subclass for Python logic nodes, executing custom code (e.g., Python functions) to directly manipulate the shared state (115). LLMConfig (194) held LLM parameters. BatchedKey (195) defined keys for batch processing.

Crucially, this declarative configuration framework could also be extended to define aspects of the inter-agent validation protocols described below. For example, NodeConfig (191) might specify validation rules associated with a node's output, identify designated validation nodes, define confidence score thresholds for triggering verification, or specify dependencies related to validation steps.

### Triage Agent Workflow Initiation

Referring now to the flowchart in FIG. 2, the Triage AI Agent (105) implemented a specific technical mechanism for initiating the main analytical workflow. Upon receiving initial input (e.g., company details, analysis goal) from the User (101) via the User Interface (102) (start of flow), the Triage Agent (105) processed this input. At A201, it checked if core information like company name/URL was present in the state (115). If not, it prompted the user at A202 and stopped. If present, at A203, it checked if competitors were already confirmed. If not, processing involved invoking an LLM or specific tools to perform preliminary analysis, such as identifying key entities like potential competitors (A204, A205).

In an important aspect, the Triage Agent (105) could be configured to present key extracted parameters (e.g., the identified potential competitors) back to the User (101) via the User Interface (102) for explicit confirmation or selection (A206). If modifications were requested, A207 handled refinement, looping back to A206. This user validation step ensured the relevance of critical inputs before the main workflow commenced.

Upon receiving confirmation from the user (or after its initial processing if confirmation was not required) (A208), the Triage Agent (105) generated a specific control signal data structure (e.g., a Command object). This control signal contained at least: (1) an initial workflow routing instruction (e.g., a goto field) indicating the next node(s) in the computational graph to be executed, and (2) a data payload (e.g., an update field containing a dictionary) comprising the validated, structured initial parameters (e.g., confirmed competitors, company info retrieved at A209). Step A210 represented invoking a tool to generate this signal.

The Triage Agent (105) transmitted this control signal to the Orchestration Engine (110). The Orchestration Engine (110) interpreted the control signal, using the data payload to update the Shared State Mechanism (115) and using the routing instruction to begin execution of the main computational graph starting from the specified node(s). This mechanism provided a technical means for translating initial user input and subsequent validation into both directed control flow and reliable initial state data for the complex multi-agent workflow.

### Inter-Agent Validation Mechanisms

A core aspect of the invention involved automated inter-agent validation protocols performed during workflow execution by designated validation nodes or logic activated by the Orchestration Engine (110). These protocols operated on structured data within the Shared State Mechanism (115) generated by different Specialized AI Agent Nodes (125) to improve output reliability and consistency. Embodiments included one or more of the following:
**1. Structured Data Cross-Referencing and Consistency Checking (****FIG. 4****):** This protocol involved activating a designated Validation Node (125, e.g., within Analysis group 120b) (A401). This node accessed multiple structured data outputs from the Shared State Mechanism (115) (A402, A403), generated by different upstream analytical agents (e.g., AgentA, AgentB). It applied predefined rules or consistency-checking models (A404) to compare these data outputs. Checks could include verifying quantitative consistency, logical consistency, or plausibility against known constraints. The Validation Node updated the Shared State Mechanism (115) with validation results (A405 or A406 based on D401), such as flags, confidence scores, or discrepancy details. Execution then continued (A407, A408).
**2. Agent-Triggered Tool-Based Verification:** This protocol involved an analytical agent (125) generating not only its primary output but also a confidence score for that output, which was stored in the Shared State Mechanism (115). The Orchestration Engine (110) evaluated this confidence score against a predefined threshold (potentially set in the configuration). If the score was below the threshold, conditional routing logic within the computational graph directed the Orchestration Engine (110) to activate a dedicated Verification Agent node (125). This Verification Agent used Tools (117), such as Web Search accessing WWW (150) or RAG accessing KHDB (130), to find external or internal corroborating or contradictory evidence for the low-confidence data point. The Verification Agent compared the retrieved evidence with the original data and updated the Shared State Mechanism (115) with its findings (e.g., corrected data, verification notes, updated confidence). This created an automated, confidence-driven verification loop.
**3. Redundant Analysis and Reconciliation (****FIG. 6****):** This protocol involved defining parallel execution paths ('fork') in the declarative configuration. Two or more distinct Specialized AI Agent Nodes (125) were directed to perform the same critical analytical task based on common input read at A601 (e.g., Task A at A602/A603, Task B at A604/A605). After these parallel agents completed ('end fork'), a dedicated Reconciliation Node (125, e.g., within Decision group 120c) was activated (A606). This node compared the outputs stored in the Shared State Mechanism (115) (A607). Based on predefined tolerance levels and rules (D601), it performed an automated reconciliation action (A608, A609), such as averaging results, selecting the result with the highest confidence, flagging the discrepancy (A613 via D602/D603), or triggering a dedicated Arbiter Agent node (A610, A611, A612 via D602) to determine a final value. The workflow could also be interrupted (A614). The reconciled value or discrepancy status was updated in the Shared State Mechanism (115), and the main workflow continued (A615).
**4. Feedback Loop Logging (****FIG. 5****,** **FIG. 7****):** This protocol involved configuring validation nodes (from the mechanisms above) to log detailed validation event data. As shown in the runtime portion (FIG 5, and steps A701-A712 of FIG 7), when a validation failure occurred (D501/D701=Fail), the Agent Validation node (125), after updating the runtime state (A505/A705), sent event data (e.g., error type, data context, agents involved) to a Feedback Logging Service (160) (A506/A706). This service persisted the data (A707) to a Feedback Store (130), separate from the runtime Shared State Mechanism (115), and confirmed the action (A708, A709). As shown in the periodic analysis portion (FIG 7, steps A713-A718), this logged data enabled subsequent offline analysis, potentially by an AI Model Validation module (165) triggered by a Timer (170) (A713). The module read (A714, A715) and analyzed (A716) the logs to identify systemic issues. This analysis could then trigger or inform actions to improve the system, such as generating alerts for an Ops/Dev Team (103) (A717) or triggering a ReTraining Pipeline (175) (A718), thereby creating a long-term improvement cycle.

### Data Integration Layer (Conceptual Embodiment)

Referring also to FIG. 8 (conceptual architecture) and FIG. 9 (conceptual flow), the system could further comprise a Data Integration Layer (180) to facilitate interaction between the AI Agent Nodes (125) and external Enterprise Systems (14X) typically connected via an Enterprise Integration Bus (ESB) (140).

The Data Integration Layer (180) acted as an intermediary, comprising components such as a Connector Manager (181), a Standardized Connector Interface (182), specific Connectors (183) for different enterprise systems, a Data Transformation Engine (184), and a secure Security/Credential Vault (185). The SQL Database (130) was used for configuration and mappings.

As shown conceptually in FIG 9, interaction was typically initiated by a Specialized AI Agent Node (125) identifying a need for enterprise data. The agent formulated a query in a standardized internal format and invoked a dedicated Tool (117) via the Agent Tool Interface (186) (A901). This tool passed the standardized query to the Data Integration Layer (180) (A902). The Connector Manager (181) selected the appropriate connector (183) (implied step before A903), retrieved credentials (implied step from 185), invoked the connector (A903), which then authenticated (A904, A904r) and executed the query (A905) against the External Enterprise System (14X). The response (A906) was returned, passed back to the Data Integration Layer (A907), transformed by the Data Transformation Engine (184) (implied step), and returned as structured data to the Orchestration Engine (110) via the interface (A908, A909) for storage in the Shared State Mechanism (115) after agent processing (A910, A911).

Potential novel aspects of this layer, if implemented, could include the specific standardized internal query format designed for agent use, an AI-assisted automated data mapping mechanism within the transformation engine (184), context-aware dynamic connector selection by the manager (181), or specific security protocols for multi-agent access via the vault (185). Validation protocols could also leverage data retrieved from different enterprise systems via this layer (180).

### g) Industrial Applicability

The invention can be used in various business contexts requiring market intelligence, competitive landscaping, strategic planning, and product development. It is applicable across industries where synthesizing data from public and private sources is essential for decision-making, including specific fields such as financial services, technology sector analysis, and pharmaceutical competitive intelligence. The system provides a platform for automating complex research and analysis tasks, making it suitable for consulting firms, market research companies, corporate strategy departments, and product management teams.

## Claims

1. A computer-implemented method for validated execution of multi-agent AI workflows, the method comprising:
a. receiving, at an input interface (102), initial input data for a task;
b. processing, by a Triage Agent node module (105) communicatively coupled to an orchestration engine (110), the initial input data to generate processed data and determine an initial workflow routing instruction;
c. generating, by the Triage Agent node module (105), a control signal comprising:
• a routing field specifying a next node in a computational graph defined by a declarative configuration; and
• a data payload field containing at least a portion of the processed data as a dictionary;
d. updating, by the orchestration engine (110), a shared state mechanism (115) by merging the dictionary from the data payload into a designated store using a cumulative update function;
e. executing, by the orchestration engine (110), the computational graph comprising a plurality of specialized AI agent nodes (125), wherein execution proceeds based on predefined dependencies stored in the declarative configuration and based on the initial routing instruction;
f. exchanging, during execution, structured data between the specialized AI agent nodes (125) indirectly via the shared state mechanism (115);
g. performing, by the orchestration engine (110) activating one or more designated validation nodes or logic, at least one automated inter-agent validation protocol on structured data stored in the shared state mechanism (115), wherein the validation protocol is selected from the group consisting of: i. structured data cross-referencing and consistency checking; ii. agent-triggered tool-based verification; iii. redundant analysis and reconciliation; and iv. feedback loop logging.

2. The method of claim 1, wherein structured data cross-referencing comprises comparing structured outputs from at least two agent nodes using predefined rules or consistency models stored in the declarative configuration.

3. The method of claim 1, wherein agent-triggered tool-based verification comprises evaluating a confidence score, and conditionally activating a verification node to query a Retrieval-Augmented Generation (RAG) tool using the output data.

4. The method of claim 1, wherein redundant analysis and reconciliation comprises executing two agent nodes with similar roles in parallel, comparing their outputs, and selecting or reconciling results based on predefined rules or an arbiter node.

5. The method of claim 1, wherein feedback loop logging comprises logging metadata of validation results and associated prompt structures to a persistent data store (130) for later analysis.

6. The method of claim 1, wherein the orchestration engine (110) utilizes a graph-based execution framework to execute the computational graph.

7. The method of claim 1, wherein the shared state mechanism comprises an information_base structured by predefined schemas associated with the agent nodes.

8. The method of claim 1, further comprising receiving a user input selecting or confirming competitor data before generating the data payload in step (c).

9. The method of claim 1, wherein the declarative configuration includes:
• agent dependencies;
• tool availability;
• AI model settings;
• input/output schemas; and
• at least one dynamically defined extraction node configured by a factory function.

10. The method of claim 1, further comprising retrieving data from an external enterprise system (14X) via:
• a data retrieval tool (117);
• a data integration layer (180) with connectors (183), a connector manager (181), and a secure credential vault (185);
• and transforming said data using a mapping engine (184) into the internal schema for inclusion in the shared state mechanism.

11. A system for validated execution of multi-agent AI workflows, the system comprising:
a. one or more processors and a memory;
b. an input interface (102);
c. a Triage Agent node module (105) to process input data and emit control signals;
d. a declarative configuration storage defining a computational graph;
e. a shared state mechanism (115) to hold structured data;
f. an orchestration engine (110) configured to:
• execute the graph based on routing instructions and configuration dependencies;
• update the shared state mechanism with agent outputs;
• activate one or more validation logics selected from: cross-referencing, tool-based verification, redundant analysis, and feedback logging.

12. The system of claim 11, wherein the shared state mechanism includes an information_base dictionary structured using schemas linked to agent node definitions.

13. The system of claim 11, wherein the declarative configuration is implemented as a hierarchical structure supporting dynamic node definitions and input/output schema associations.

14. The system of claim 11, further comprising a data integration layer (180) for querying external systems and transforming retrieved data into a usable internal format for workflow execution.

15. The system of claim 11, wherein the orchestration engine conditionally triggers validation logic based on metadata or thresholds stored in the declarative configuration.

16. The system of claim 11, wherein feedback loop data is persisted to a logging repository (130) for training or fine-tuning model behavior via the AI model validation module (165).
